# EUROPÄISCHE PATENTSCHRIFT

(11) **EP 1 340 015 B1**
(45) Veröffentlichungstag und Bekanntmachung des Hinweises auf die Patenterteilung: **07.05.2008**
(21) Anmeldenummer: 00979657.4
(22) Anmeldetag: 01.12.2000
(51) Int. Cl.: F16L 33/04, F16L 21/06

(54) **SCHELLE**
BAND CLAMP
COLLIER DE SERRAGE

(43) Veröffentlichungstag der Anmeldung: 03.09.2003
(73) Patentinhaber: Norma Sweden AB, 111 60 Stockholm (SE)
(72) Erfinder: SCHMIDT, Bernhard, 59846 Sandern (DE); DJAM, Amir, 57076 Siegen (DE); KLEIN, Martin, 57223 Kreuztal (DE); BLAZEK, Jan, 693 01 Hustopece (CZ); SEDLACEK, Jan, 664 53 Zatcany 185 (CZ); RICHTER, Jürgen, 34431 Marsberg (DE)
(74) Vertreter: Sperling, Rüdiger
(86) Internationale Anmeldenummer: PCT/EP2000/012121
(87) Internationale Veröffentlichungsnummer: WO 2002/046656

(56) Entgegenhaltungen:
- DE-A- 3 843 738
- US-A- 1 726 006
- US-A- 4 664 428
- US-A- 4 790 574
- US-A- 5 131 698
- US-A- 6 116 659

## Beschreibung

Die Erfindung betrifft eine Schelle zum Verbinden von einem Schlauch- oder Rohrende mit einem darin eingesteckten Rohrende, mit einem Schellenband mit zwei freien Enden, welche die Verbindung umgreift, und mit einander gegenüberliegenden, im wesentlichen radial abstehenden Flanschabschnitten an den Enden, an denen die Schelle um die Verbindung spannbar ist.

Schellen der genannten Gattung sind im Handel erhältlich. Die einander gegenüberliegenden Flanschabschnitte sind einstückig an dem umlaufenden Schellenbereich durch Abwinkelung des Schellenbandendes hergestellt. Beim Spannen der Schelle um die Verbindung kann es vorkommen, daß Bandmaterial nachfließt, indem sich z.B. die Schelle im Bereich der Abwinkelung aufbiegt und der Umfangsbereich von dem Schlauch- oder dem Rohrumfang etwas entfernt. Die Folge davon ist, daß sich die Spannung der Schelle reduziert und die Verbindung gelockert wird.

Aus der US 4,664,428 ist eine Schelle zum Verbinden von Rohrenden bekannt. Die offenbarte Schelle umfasst Mittel zum Verhindern des Fließens des Schellenmaterials und eine im Verbindungsbereich des Schellenbande angeordnete Dichtplatte aus vergütetem Stahl. Über den Umfang des Schellenbandes und ober die Länge der Dichtplatte erstrecken sich vorstehende Abschnitte, in denen O-Ringe zur Abdichtung verlaufen.

Die US 5,131,698 offenbart eine Rohrschelle mit einem Schellenband und radial abstehenden Flanschen zum Befestigen der Enden des Schellenbandes. Im Spaltbereich des Schellenbandes ist eine Platte vorgesehen, die eine zu der Außenkontur des Schellenbandes passende Form aufweist, so dass bestimmte Abschnitte der Platte in zugehörige Abschnitte des Schellenbandes in Umfangsrichtung ragen. Die Flansche werden mit einer Schraube aneinander gezogen und die Schelle somit fixiert.

Auch aus den Schriften US 1,726,006A, DE 38 43 738 A, US 6,116,659A, US 4,790,574 und US 862,997 sind Schellen bekannt, die Rohrenden miteinander verbinden.

Der Erfindung liegt die Aufgabe zugrunde, eine Schelle der genannten Gattung bei kostengünstiger Herstellung so auszubilden, dass sie gegenüber den Schellen des Stands der Technik eine besonders gute Dichtheit aufweist.

Die Aufgabe wird, ausgehend von einer bekannten Schelle, durch die Merkmale des Anspruchs 1 gelöst.

Die Erfindung umfasst die technische Lehre, dass im Bereich mindestens eines der Flanschabschnitte Mittel zum Verhindern des Nachfliessens von Schellenmaterial während des Spannungszustands der Schelle ausgebildet sind. Die Mittel zum Verhindern des Fliessens von Schellenmaterial während des Spannungszustands der Schelle bewirken, dass dem Aufbiegen des Radius zwischen dem umlaufenden Abschnitt der Schelle und dem radial abstehenden Flanschabschnitt ein Widerstand entgegengesetzt wird. Daher ist es besonders günstig, wenn die Mittel zum Verhindern des Nachfliessens zumindest zum Teil im Bereich des Winkels zwischen dem Umfangsteil der Schelle und dem Flanschabschnitt angeordnet sind.

Vorteilhafterweise sind die Mittel zum Verhindern des Fließens als Rippe ausgebildet. Durch die rippenförmige Ausbildung der Mittel zum Verhindern des Nachfließens erfolgt eine wirksame Versteifung der im Winkel zueinander stehenden Abschnitte der Schelle in diesem kritischen Bereich.

Vorteilhafterweise kann die Rippe als Sicke in dem Schellenmaterial eingeformt sein. Hierdurch wird eine kostengünstige Herstellweise erzielt.

Bei einer alternativen Ausführungsform kann die Rippe als Winkelblech ausgebildet sind, das bei schmalen Schellen jeweils am Aussenrand der Schelle oder bei breiteren Schellen an gewünschten Stellen befestigt sein kann.

Bei einer nächsten Ausführungsform kann das Mittel zum Verhindern des Nachfliessens aus Schweisspunkten/-nähten bestehen, mittels denen Scheilenbestandteile an dem umlaufenden Schellenband befestigt sind. Durch die Materialänderung in dem kritischen Bereich der Abwinkelung tritt eine Verfestigung des Materials ein, so dass auch durch diese Massnahmen einem Aufbiegen der Abwinkelung entgegengewirkt wird.

Vorteilhafterweise ist das Mittel zum Verhindern des Nachfliessens als Verdrehsicherung für die Spannmittel ausgebildet, die das Spannen der Schelle bewirken. Hierzu können die Rippen oder Sicken im Bereich von Durchgangsöffnungen in den Flanschabschnitt so angeordnet werden, dass ein eingesteckter Bolzen, der als Spannmittel dient, an seinem Kopf verdrehsicher gehalten ist.

Vorteilhaft ist es bei solchen Schellen, die an den radial abstehenden Flanschabschnitten mit Verstärkungsplatten versehen sind, an diesen am Ort einer Rippe eine Ausnehmung anzubringen, in die die Rippe eintreten kann.

Vorteilhaft ist es bei einer Schelle, bei der das Spannmittel aus einer Schraubenmutteranordnung besteht, dass am Bolzen der Schraube ein Mehreck, beispielsweise ein Vierkant, ausgebildet ist, das von einer entsprechend geformten Ausnehmung in den Flanschabschnitten verdrehsicher aufgenommen ist. Durch diese Massnahme wird sichergestellt, dass der Auflagebereich zwischen Bolzen und Flanschabschnitte linienbzw. über eine grosse Fläche verteilt wird, im Gegensatz zu den bisher üblichen im wesentlichen punktförmigen Belastungen, die dann entstehen, wenn ein Bolzen zylindrischen Querschnitts durch ein Durchgangsloch im Flansch ebenfalls von kreisrundem Querschnitt hindurchgeführt wird.

Bei einer derartigen Ausführungsform ist es darüber hinaus günstig, dass an der Mutter der Schraubenmutteranordnung eine Hinterschneidung zur Aufnahme eines Bereichs des Mehrecks angeformt ist. Diese Hinterschneidung kann deshalb sinnvoll sein, weil das Mehreck sich auch durch den Durchgang des gegenüberliegenden Flanschabschnitts hindurch erstrecken soll, da auch an diesem Flanschabschnitt die vorteilhafte Wirkung eine großflächigen Auflage zum Tragen kommen soll.

Bei einer Schelle zum Verbinden von einem Schlauch- oder Rohrende mit einem Rohrende, mit einem die einander zugeordneten Enden umgebenden Schellenband, dessen Spannschlitz mit einer Überbrückung in Form eines Gleitstegs abgedeckt ist, kann es günstig sein, dass an der Überbrückung diejenigen Ränder, die mit dem Schellenband abdichtend zusammenwirken, mit einem Mittel zum Verhindern von Leckage versehen sind.

Günstig kann sein, die Mittel zum Verhindern von Leckage als Labyrinth-Dichtung auszubilden. Dadurch wird der Gegendruck erhöht und die Leckage reduziert.

Dabei ist es vorteilhaft, wenn die Ränder und der Rand einer zugeordnete Einprägung im Schellenband einen labyrinth ähnlichen Verlauf aufweisen.

Das Mittel zum Verhindern von Leckage kann bei einer alternativen Ausführungsform ein plastisch oder elastisch verformbares Dichtungsmaterial sein, das in Form einer Raupe oder Rippe entlang dem Rand der Überbrückung unter dem Schellenmaterial angeordnet ist.

Bei einer weiteren Alternative kann die Verbindung der einander zugeordneten Enden des Schlauches bzw. des Rohres einen stumpf anstossenden Übergang aufweise, wobei an der Stelle des Übergangs ein kontinuierlich umlaufender radial nach innen vorstehender Ring angeordnet ist.

Der Ring kann günstigerweise eine in dem Material der Schelle und der Überbrückung eingeprägte Sicke sein und bereits bei dem Press-Ziehvorgang während der Herstellung eingedrückt werden.

Der Ring kann auch ein separate hergestelltes Bauteil aus einem plastischem oder elastomeren Material sein und nachträglich angebracht werden.

Im folgenden wird die Erfindung anhand verschiedener Ausführungsbeispiele näher erläutert. In den Figuren zeigen :
Fig.1 eine perspektivische Ansicht einer erfindungsgemäßen Schlauchschelle in perspektivischer Darstellung,
Fig. 2 eine Draufsicht der Schelle aus Fig. 1,
Fig. 3 eine Seitenansicht der Schelle aus Fig.1 mit Schlauch- und Rohrende,
Fig. 4 eine perspektivische Teildarstellung eines Winkelbereichs zwischen einem Flanschabschnitt und einem Umfangsabschnitt der Schelle,
Fig. 5 eine weitere Ausführungsform entsprechend derjenigen in Fig. 4,
Fig. 6 eine vergrößerte Darstellung des Details II aus Fig. 2,
Fig. 6a eine Ausführungsform, bei der die Mittel zum Verhindern eines Fließen durch Schweißstellen gebildet sind,
Fig. 7 eine perspektivische Darstellung eines Befestigungsmittels mit Mehreck,
Fig. 8 eine perspektivische Darstellung eines weiteren Befestigungsmittels in perspektivischer Darstellung,
Fig. 9 eine perspektivische Darstellung einer Mutter mit Hinterschneidung,
Fig. 10 eine perspektivische Darstellung einer Verstärkungsplatte,
Fig. 11 eine perspektivische Darstellung einer Überbrückung mit Labyrinth-Rändem,
Fig. 12 eine Schnittdarstellung eines Teilbereichs der Schelle mit Überbrückung und eingelegter Dichtungsraupe,
Fig. 13 eine perspektivische Teildarstellung im Schnitt eines Übergangs zwischen den Enden eines Schlauches und eines Rohres mit V-förmiger Sicke,
Fig. 14 eine perspektivische Teildarstellung entsprechend Fig. 13, mit einem Ring an der Stelle der Sicke sowie
Fig. 15c-15e ein Ausführungsbeispiel eines erfindungsgemäßen Gleitstegs.

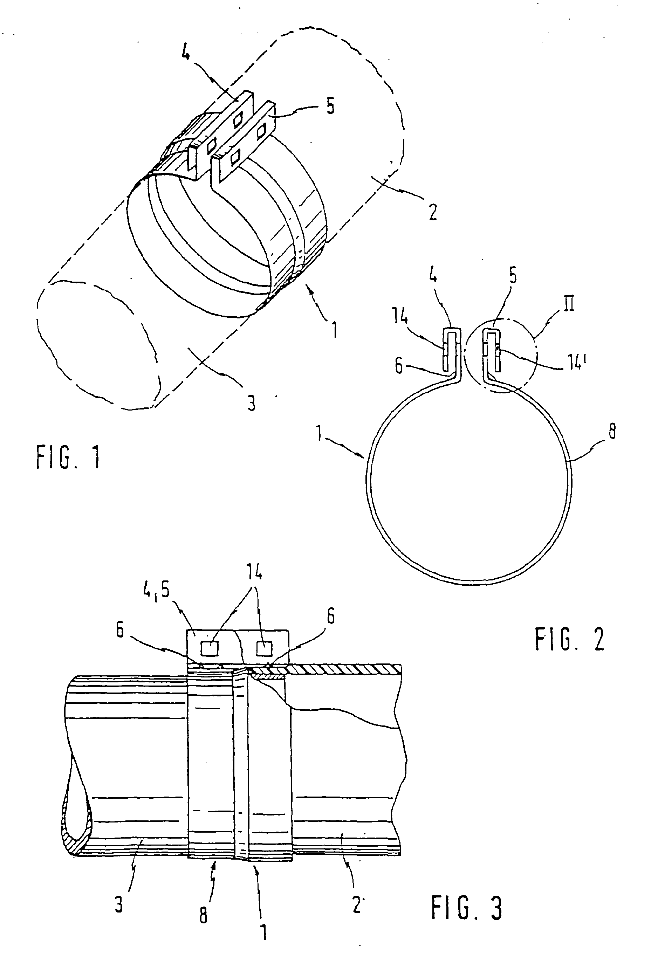

Figur 1 zeigt schematisch eine Schelle 1 mit in Phantomdarstellung wiedergegebenen Schlauchende 2 und Rohrende 3. An der Schelle 1 sind Flanschabschnitte 4 und 5, die dem Spannen der Schelle dienen, schematisch dargestellt.

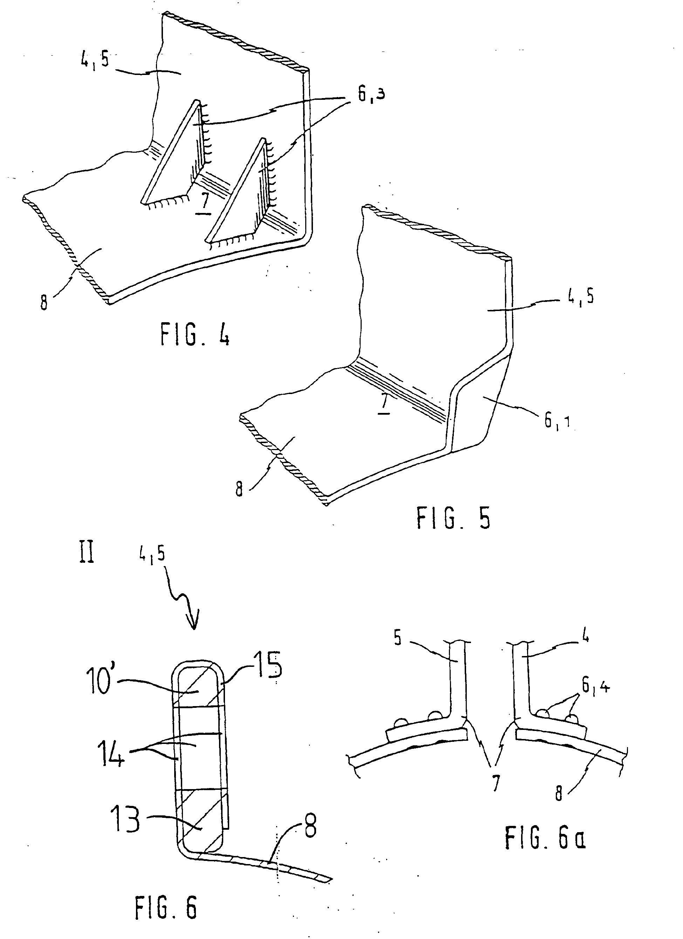

Figur 2 zeigt die Schelle aus Figur 1 in Draufsicht. In dieser Darstellung ist ein Detail II gekennzeichnet, das in Figur 6 vergrößert wiedergegeben ist. In dem Winkelbereich zwischen dem Schellenband 8 und dem Flanschabschnitt 4 bzw. 5 ist ein Mittel 6 zum Verhindern des Nachfließens angeordnet.

In den Figuren 1 und 2 ebenso wie in Figur 3 sind viereckige Durchbrüche 14 in den Flanschabschnitten 4,5 erkennbar.

Figur 3 zeigt eine Schelle entsprechend derjenigen in Figur 2 in Seitenansicht, teilweise im Schnitt, wobei es sich um eine solche Schelle handelt, bei der das Schlauchende 2 größeren Durchmessers auf ein Rohrstück 3 kleineren Durchmessers aufgeschoben ist.

Die Mittel 6 zum Verhindern eines Nachfließens sind insbesondere in dem Bereich des Rohres kleineren Durchmessers erkennbar, sie sind jedoch auch im Bereich der Schelle ausgebildet, die den größeren Durchmesser, nämlich den Abschnitt, in welchem das Schlauchende das Rohr übergreift, umspannt.

In Figur 4 ist eine Teildarstellung des Winkelbereichs 7 dargestellt, der zwischen dem Schellenband 8 und dem Flanschabschnitt 4 bzw. 5 ausgebildet ist. In diesem Winkelbereich 7 ist das Mittel zum Verhindern des Nachfliessens in Form von Winkelblechen 6.3 befestigt. Diese Schweißausführung bietet sich insbesondere bei Schellen größeren Durchmessers an, bei denen eine Sickenausbildung entsprechend der Darstellung in Figur 6 oder eine Umbiegung entsprechend der Darstellung in Figur 5 nicht möglich ist.

Bei der Ausführung gemäß Figur 5 ist das Mittel zum Verhindern des Nachfließens als einfache Aufbiegung 6.1 an der Außenkante der Schelle ausgebildet.

Figur 6 zeigt das Detail II us Figur 2, teilweise im Schnitt.

Der radial abstehende Flanschabschnitt ist im Winkelbereich 7 von dem Schellenband 8 radial nach außen gebogen und weist noch eine zusätzliche doppelte Abwinkelung auf, dergestalt, dass ein Freiraum für eine Verstärkungsplatte 10'entsteht. In dem Flanschabschnitt 4 bzw. 5 ist ein Durchgang 14 sowohl in dem abgewinkelten Schellenmaterial als auch in der Verstärkungsplatte 10 ausgebildet.

Die Spannmittel sind bei den dargestellten Ausführungsbeispielen als Schraubenmutteranordnungen ausgebildet.

Die letzte Abwinkelung der doppelten Abwinkelung des Flanschabschnitts 4 bzw. 5 kann bereits im oberen Bereich der Verstärkungsplatte 10' enden, noch bevor der freie Endabschnitt 15 den Bereich des Durchgangs 14 erreicht hat.

In Figur 6a ist eine weitere Ausführungsform des Mittels zum Verhindern eines Fließens dargestellt ; Bei dieser Alternative besteht der Flanschabschnitt 4 aus einem gesonderten Bauteil, das mittels Schweißpunkte 6.4 an den Endabschnitt der Schelle angebracht ist. Die Verschweißung, insbesondere an einer Stelle möglichst nahe an dem radialen Schenkel des Winkels 7, führt zu einer Verstärkung des Radiusbereiches, wodurch ein Aufbiegen und Nachfließen vermieden oder erschwert wird.

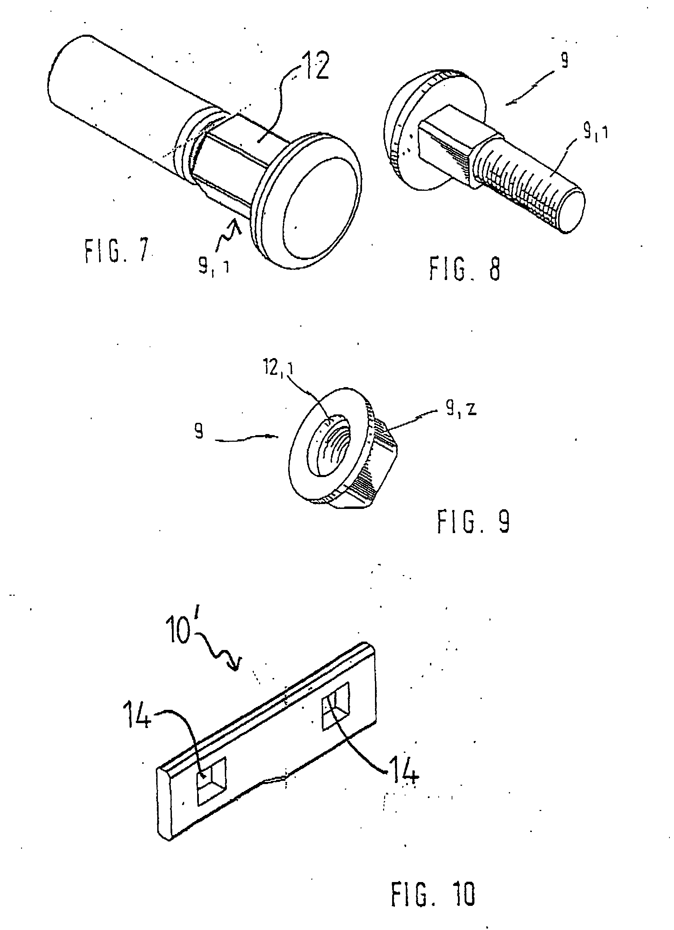

Figur 7 zeigt eine perspektivische Darstellung einer Schraube. An der Schraube ist ein Mehreck, im vorliegenden Fall ein Sechskant 12, ausgeformt. Der Sechskant 12 tritt durch den Durchgang 14 in dem Flanschabschnitt 4 und 5, sowohl durch das Material der Schelle als auch durch die Verstärkungsplatte, hindurch. Die Ausbildung des Mehrecks 12 kann sich über eine Länge derartig erstrecken, dass beide sich einander gegenüberliegende Flanschabschnitte 4 und 5 von diesem Mehreck 12 durchdrungen werden. Damit ist gewährleistet, dass bei beiden Flanschabschnitten 4,5 eine großflächige Anlage auf einer entsprechenden Fläche des Mehrecks zustande kommt. Günstigerweise besteht das Mehreck aus einem Viereck in einer solchen Ausrichtung, dass die oben liegenden Seiten des Vierecks parallel zur Achse der Schelle verlaufen.

Durch die Verwendung eines Vier- oder Mehrecks am Bolzen kann der Kopf des Bolzens 9.1 als Halbrund entsprechend einer sogenannten Schlossschraube ausgebildet sein.

In Figur 9 ist eine Mutter 9.2 als Bestandteil der Spannmittel 9 dargestellt. Die Mutter 9.2 weist eine Hinterschneidung 12.1 auf, in die der dem Gewinde des Bolzens 9.1 zugewandte Bereich des Mehrecks 12 eintreten kann, sollte er während des Spannens über die Außenkontur des Flanschabschnitts 4,5 hinaustreten.

Figur 10 zeigt die Verstärkungsplatte 10' in perspektivischer Darstellung mit den Durchgängen 14, deren obere Kanten 14' parallel zur Zentralachse der Schelle verlaufen.

Die Unterkante der Verstärkungsplatte 10' ist der Stufe des Schellenbandes 8 angepasst.

Aufgrund der Ausbildung der Verstärkungsplatte 10' in jedem der Flanschabschnitte 4 und 5 ist es möglich, die Schraubenmuttemanordnung zum Spannen der Schelle von einer beliebigen Seite zu befestigen. Für bestimmte Anwendungsgebiete ist eine Verwendung von mit einem Mehreck ausgestatteten Befestigungsmitteln nicht gewünscht. Dann kann die Sicken oder Rippenausbildung so an dem Winkelbereich angeordnet sein, dass diese Verstärkung gleichzeitig als Verdrehsicherung dient.

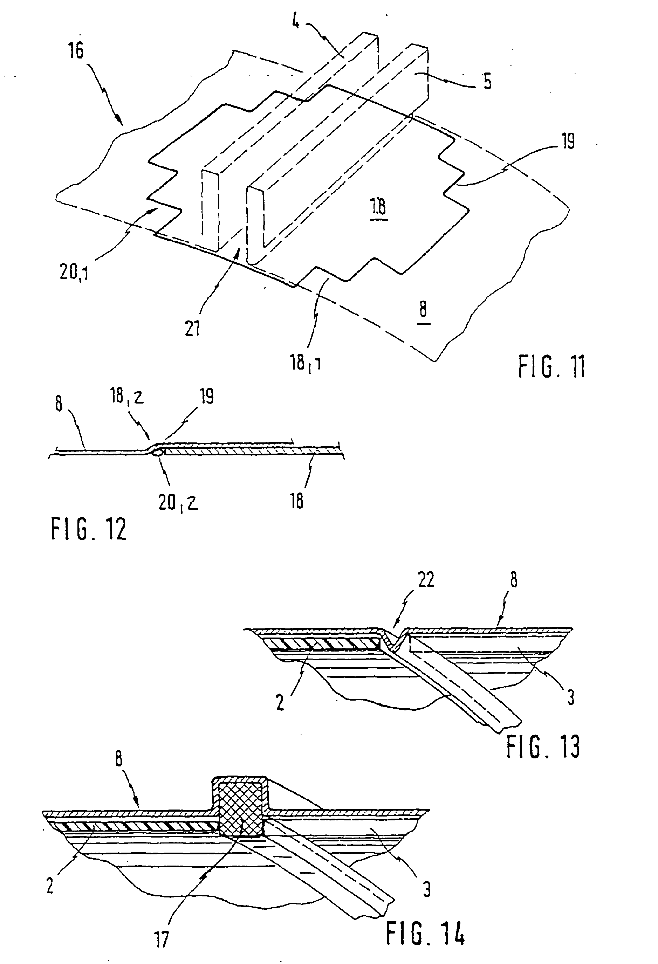

In Figur 11 ist ein plattenförmiger Gleitsteg 18 dargestellt, der den Spannschlitz 21 zwischen den beiden Flanschabschnitten 4 und 5 abdeckt. Die unter dem Schellenband 8 liegenden Ränder 19 sind mit einem Mittel zum Verhindern von Leckage versehen. In dem dargestellten Ausführungsbeispiel bestehen die Mittel aus einer Labyrinth Dichtungsanordnung 20.1. Hierzu verlaufen sowohl die Ränder 19 als auch die Bänder 18.1 der Einprägungen 18.2 labyrinthähnlich.

Bei einer in Figur 12 dargestellten Abwandlung besteht das Mittel zum Verhindern von Leckage aus einer Raupe 20.2, die am Rand 19 der Überbrückung in den Spalt der Einprägung 18.2 gelegt ist.

Die Verbindung der Enden des Schlauches 2 und des Rohres 3 kann als Überlappung, d. h. der Schlauch 2 ist auf das Rohr 3 aufgeschoben (s. Figur 3) ausgeführt sein, oder als stumpfanstoßender Übergang, wie in Figur 13 dargestellt.

Dabei ist ein kontinuierlich umlaufender, radial nach innen vorstehender Ring 17 zwischen den Enden des Rohres 3 und des Schlauches 2 angeordnet. Die jeweiligen Enden stoßen vorteilhafterweise an den Ring 17 an, der als eine Sicke 22 in das Schellenband eingedrückt sein kann.

Bei der in Figur 14 dargestellten Alternative besteht der Ring 17 aus einem plastischen oder elastischen Material, das formschlüssig im Schellenband gehalten ist. Für besondere Anwendungszwecke kann der Ring 17 auch aus Metall oder einem anderen Material bestehen.

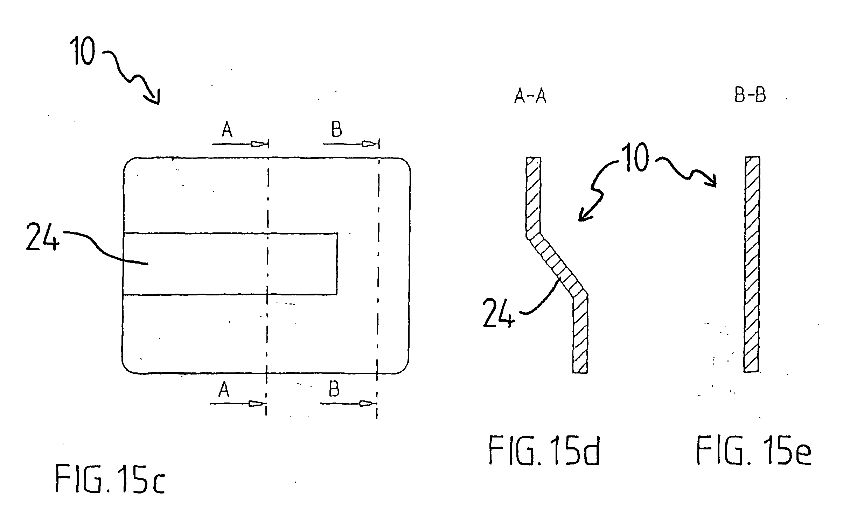

Die Figuren 15c bis 15e zeigen ein Ausführungsbeispiel eines erfindungsgemässen Gleitstegs zur Vermeidung von Leckagen, das weitgehend mit dem vorstehend beschriebenen und in der Figur 11 dargestellten Ausführungsbeispiel übereinstimmt, so dass im folgenden dieselben Bezugszeichen verwendet werden und zur Vermeidung von Wiederholungen auf die vorstehende Beschreibung verwiesen wird.

Eine Besonderheit dieses Ausführungsbeispiels besteht darin, dass der Gleitsteg 10 keine seitlichen Laschen aufweist, sondern eine nahezu rechteckige Form mit abgerundeten Ecken aufweist, wie insbesondere aus Figur 15c ersichtlich ist.

Der Gleitsteg 10 ist hierbei mittig im Bereich der Stufenprägung angeordnet und einseitig durch eine Schweißverbindung 23 an einem freien Ende des Schellenbandes 8 befestigt.

Erfindungsgemäß besteht der Gleitsteg 10 aus einem verformbaren und dünnen Material und weist eine Dicke von nur 0,2-0,3 mm auf, so dass sich der Gleitsteg 10 beim Spannen der Schelle so dicht an das Schellenband 8 anlegt, dass praktisch kein Spalt bestehen bleibt. Eine Vertiefung des Schellenbandes 8 zur Aufnahme des Gleitstegs 10 ist deshalb bei dieser Ausführungsform nicht erforderlich. Vielmehr erhält der Gleitsteg 10 seine Festigkeit durch den Einsatz eines hochfesten Materials.

Der Gleitsteg 10 weist hierbei auf einem Teil seiner Umfangslänge eine Stufenprägung 24 auf, wie insbesondere aus Figur 15d ersichtlich ist, so dass sich der Gleitsteg 10 in die Stufenprägung des Schellenbandes 8 einpasst. Diese Stufenprägung erstreckt sich jedoch nicht über die gesamte Umfangslänge des Gleitstegs 10, sondern ausgehend von dem Ende mit der Schweißverbindung 23 nur über rund 75% der Umfangslänge des Gleitstegs 10. An seinem freien Ende ist der Gleitsteg 10 dagegen vor der Montage plan, wie insbesondere aus der Schnittdarstellung in Figur 15e ersichtlich ist. Beim Spannen der Schelle formt sich der ebene Abschnitt des Gleitstegs 10 dann unter Einwirkung des Spanndrucks dicht an die Verbindungsstelle zwischen dem Schlauch, dem Schlauchstutzen und dem Schellenband 8. Hierdurch ist es möglich, Toleranzunterschiede zwischen dem Schlauch und dem Stutzen auszugleichen. Schließlich ist bei diesem Ausführungsbeispiel zwischen den beiden Flanschabschnitten 4,5 eine Rundschnur 25 eingelegt, die unmittelbar an den Gleitsteg 10 angrenzt und vorzugsweise aus einem hochtemperaturbeständigen Material wie beispielsweise Glasfaser besteht, wodurch die Dichtigkeit der Verbindung nochmals verbessert wird.

## Patentansprüche

1. Schelle (1) zum Verbinden von einem Schlauch- oder Rohrende (2) mit einem darin eingesteckten Rohrende (3), mit einem Schellenband (8) mit zwei freien Enden, welche die Verbindung umgreift, und mit einander gegenüberliegenden, im wesentlichen radial abstehenden Flanschabschnitten (4, 5) an den Enden, an denen die Schelle (1) um die Verbindung spannbar ist, und die zwischen sich einen Spalt bilden, wobei im Bereich mindestens eines der Flanschabschnitte (4, 5) Mittel (6) zum Verhindern des Fließens des Schellenmaterials unter Spannung ausgebildet sind, und wobei der Spalt zwischen den beiden freien Enden des Schellenbands (8) durch einen Gleitsteg (10) überdeckt ist, dessen sich über den Spalt hinaus erstreckende Ränder unter den beiden freien Enden des Schellenbands (8) liegen, und der aus einem hochfesten, verformbaren Material besteht und eine Dicke von 0,2 - 0,3 mm aufweist.

2. Schelle(1) nach Anspruch 1, **dadurch gekennzeichnet, daß** der Gleitsteg (10) im wesentlichen rechteckig ist.

3. Schelle (1) nach Anspruch 1 oder 2, **dadurch gekennzeichnet, daß** der Gleitsteg (10) eine Stufenprägung (24) aufweist.

4. Schelle (1) nach Anspruch 3, **dadurch gekennzeichnet, daß** sich die Stufenprägung (24) des Gleitstegs (10) vor der Montage nur über einen Teil seiner Umfangslänge erstreckt, wohingegen der Gleitsteg (10) auf dem restlichen Teil seiner Umfangslänge vor der Montage im wesentlichen plan ist.

## Claims

1. A clamp (1) for joining a tube or pipe end (2) with a pipe end (3) inserted therein, comprising a clamp band (8) with two free terminal parts enclosing the joint, and having substantially radially outward projecting flange portions (4, 5) at the ends thereof, by means of which the clamp (1) can be tensioned around the joint and which form a gap between them, wherein in the area of at least one of said flange portions (4, 5) means (6) are provided for the prevention of creeping of the clamp material under tension, and wherein the gap between said two free terminal parts of the clamp band (8) is covered by a slide plate (10), the edges of which extending beyond said gap lie under both free terminal parts of the clamp band (8), and which is made of a high-strength, ductile material and has a thickness of 0.2 - 0.3 mm.

2. The clamp (1) as claimed in claim 1, **characterized in that** the slide plate (10) is substantially rectangular.

3. The clamp (1) as claimed in claim 1 or 2, **characterized in that** the slide plate (10) is provided with an embossed step (24).

4. The clamp (1) as claimed in claim 3, **characterized in that** said embossed step (24) of the slide plate (10) extends over only a part of its circumferential length before mounting, whereas the slide plate (10) is substantially flat in the remaining part of its circumferential length before mounting.

## Revendications

1. Collier (1) pour la connexion d'une extrémité de tube ou tuyau flexible (2) avec une extrémité de tube insérée (3), comprenant une bande de collier (8) avec deux extrémités libres, collier qui entoure la connexion et comprenant des sections de bride (4, 5) mutuellement opposées faisant essentiellement saillie radialement aux extrémités desquelles peut être serré le collier (1) autour de la connexion et qui forment une fente entre elles, dans la zone d'au moins l'une des sections de bride (4, 5), des moyens (6) étant placés sous contrainte pour empêcher le fluage du matériau de collier, et la fente étant recouverte entre les deux extrémités libres de la bande de collier (8) par une plaque coulissante (10), dont les bords s'étendant au-delà de la fente se trouvent en dessous des deux extrémités libres de la bande de collier (8), et qui se compose d'un matériau déformable et extrêmement résistant et présente une épaisseur comprise entre 0,2 et 0,3 mm.

2. Collier (1) selon la revendication 1, **caractérisé en ce que** la plaque coulissante (10) est de forme sensiblement rectangulaire.

3. Collier (1) selon la revendication 1 ou 2, **caractérisé en ce que** la plaque coulissante (10) présente un gaufrage par palier (24).

4. Collier (1) selon la revendication 3, **caractérisé en ce que** le gaufrage par palier (24) de la plaque coulissante (10) ne s'étend avant le montage que sur une partie de sa longueur périphérique, la plaque coulissante (10) étant sensiblement plane sur la partie restante de sa longueur périphérique avant le montage.
